# EUROPEAN PATENT APPLICATION

(11) **EP 1 544 882 A2**
(43) Date of publication of application: **22.06.2005**
(21) Application number: 04028816.9
(22) Date of filing: 06.12.2004
(51) Int. Cl.: H01H 35/10, A23G 9/04, H02K 29/10

(54) **Control device for an electrical motor power supply**

(30) Priority: 19.12.2003 IT MI20032526
(71) Applicant: Nemo S.r.l., 25010 S. Zeno Naviglio (IT)
(72) Inventor: Procuranti, Walter, I-25086 Rezzato(Brescia) (IT)
(74) Representative: Rapisardi, Mariacristina

(57) **Abstract**

The control device for the power supply circuit on an electric motor has means for moving a control member of a power supply circuit switch, rotated by the electric motor shaft and radially movable due to a variation in the centrifugal force to which they are subjected, between a first operating position wherein the control member activates the switch to open the power supply circuit, and a second operating position wherein the control member activates the switch to close said power supply circuit.

## Description

The present invention relates to a control device for an electrical motor power supply, preferably but not exclusively applicable in combination with a machine for ice-cream production having a mixing blade driven by an electric motor.

An electric motor wherein slowing down or arrest of the motor shaft due to excessive resistance caused by the loaded product compared to its nominal power supply, can cause serious and even irreparable damage if the electrical power supply is not cut off rapidly.

In order to prevent this problem traditional electric motors can be equipped with various safety systems, such as fuses, thermofuses, thermocouples, thermostats, thermal sensors and the like that operate to cut off the power supply whenever the motor temperature reaches a pre-established upper limit. Of course the effectiveness of these safety systems depends on the rapidity of intervention after the critical temperature has been identified, since the electrical motor life is directly linked to factors such as the number, intensity and duration of the overheating events to which the motor is subjected.

Moreover, usually the resetting of a safety system is delayed because of the fact that a certain pause must be allowed, as this is necessary to cool down the safety system.

These problems are particularly important in the field of small household appliances where electric motors can be subjected to intense and prolonged stress by careless users, and sometimes started up again without waiting sufficiently for the appliance to cool down completely.

This necessarily leads to deterioration in electric motors and/or calling for technical assistance.

The technical task proposed by the present invention is therefore to realise a power supply control device for electric motors able to eliminate the technical problems in known technical state of the art.

Within the context of this technical task, one aim of the invention is to realise a control device for electric motor power supply that intervenes rapidly and efficiently, and that permits immediate re-start after the intervention.

Another aim of the invention is to realise a control device for electric motor power supply that is simple and economical to construct.

The technical task, as well as these and other aims according to the present invention, are achieved by realising a control device for electric motor power supply, characterised in that it has means for moving a control member of a power supply circuit switch, activated in rotation by the said electric motor shaft and radially movable due to the effect of the centrifugal force to which they are subjected, between a first operating position wherein the control member activates the switch to open the power supply circuit, and a second operating position wherein the control member activates the switch to close said power supply circuit.

The control device according to the present invention operates in any position whatsoever, intervenes rapidly to prevent motor overheating and damage, and permits motor start-up as soon as the resistance load drops below the programmed threshold.

The invention also relates to a machine for producing ice-cream, the type comprising a system for generating cold temperatures associated with a drum wherein the mixing blade is rotated by an electric motor that is equipped with the aforesaid control device for the electric motor power supply circuit.

The invention also relates to a process for ice-cream production using an ice-cream machine composed of automatic activation of the said cold generation system and the said electric motor power supply control device system in periodic mode, in order to maintain the ice-cream constantly at the required consistency.

Moreover, other characteristics of the present invention are defined in the appended claims.

Further characteristics and advantages of the invention will be explained more clearly in the description of a preferred but not exclusive embodiment of the power supply control device of an electric motor according to the finding, illustrated in an indicative but by no means limitative manner in the appended drawings wherein:
- Figure 1 shows a perspective view of the interior of a machine for ice-cream production equipped with a power supply control device for the electric motor according to the present invention;
- Figure 2 shows a side view of the machine illustrated in figure 1;
- Figure 3 is an enlarged view of the cross-section of the power supply control device for the electric motor along a plan containing the motor shaft axis;
- Figure 4 shows a side view of a control device according to a different preferred embodiment of the present finding in the alignment position of the light beam with one of the holes in the rotating organ;
- Figure 5 shows a plan view of the device illustrated in figure 4;
- Figure 6 shows a side view of the device illustrated in figure 4, in a non-aligned position of the light beam with one of the rotation organ holes; and
- Figure 7 is a plan view of the device illustrated in figure 6.

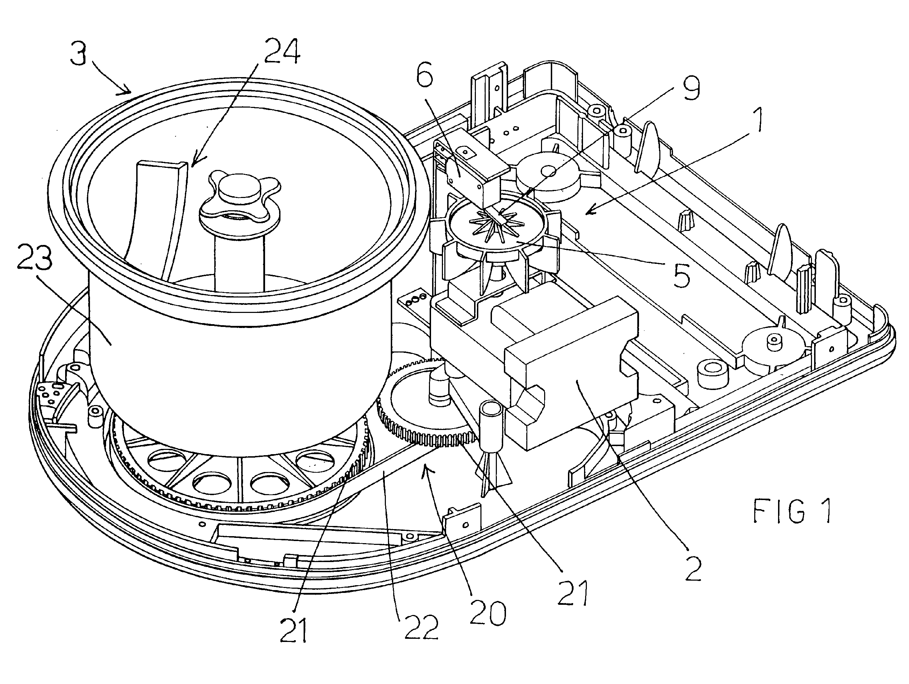

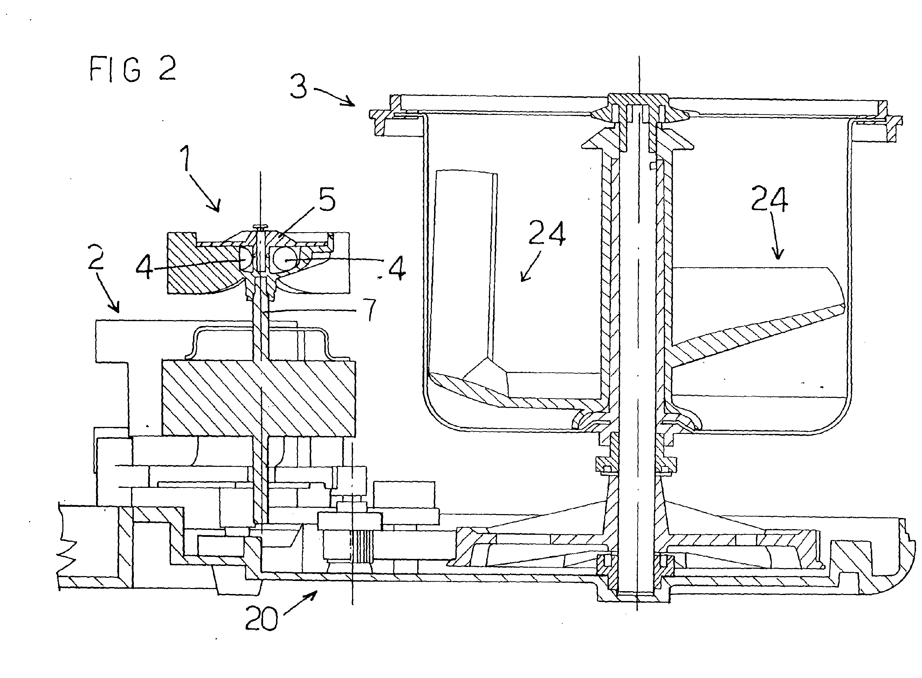

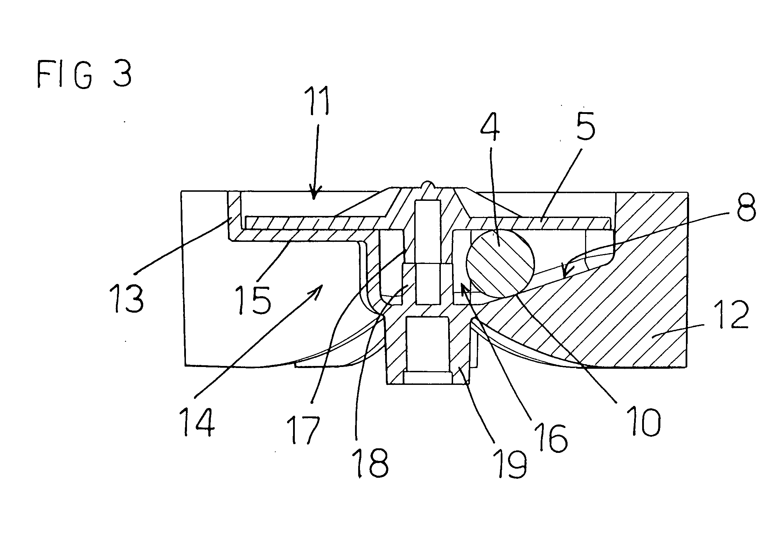

Figures 1 to 3 show a control device 1 for the power supply of an electric motor 2.

Although the control device 1 is illustrated in combination with an ice-cream production machine 3, it must be remembered from the beginning that device 1 can be associated in the same manner with an electric motor having a completely different application, such as another type of household appliance.

The control device 1 has means 4 for moving a control member of a switch 6 on the power supply circuit, rotated by the electric motor 2 shaft 7, which are movable radially due to the variation effect of the centrifugal force to which they are subjected, between a first operating position wherein the control member 5 activates the switch 6 to open the power supply circuit, and a second operating position wherein the control member 5 activates the switch 6 to close the power supply circuit. Switch 6 is preferably a lever type 9 that can be activated by the control member 5.

The displacement of moving means 4 between the first and second operating positions is caused by the variation in the angular speed of the electric motor 2 induced by the variation of the resistance load on shaft 7.

In the preferred embodiment illustrated, the first operating position of moving means 4 is radially internal and corresponds to a first angular speed of motor 2, while the second operating position of moving means 4 is radially external and corresponds to a second angular speed of motor 2, higher than the first angular speed.

The moving means 4 travel along a sliding guide 8 sloping in a direction at right angles to the rotation axis, that can coincide with the axis of shaft 7 as illustrated.

In the preferred embodiment illustrated herein, the control member 5 is composed of a disk, while the moving means 4 are composed of one or more spheres that travel along the sloping sliding guide 8 from an undercut 10 of a recess 11 within a body 12 for housing and guiding the control member 5.

In particular, the sloping siliding guide 8 has a converging surface towards the radially external end of the disk.

The recess 11 is adapted to guide the control member 5 to slide along the rotating axis of the moving means 4. Moreover the recess 11 also has a side wall 13 to limit the disk sideways travel and to act as a radially external stop for the moving means 4, as well as a base 14 that has at least one raised area to support the disk and at least one lowered area 10 that defines the aforesaid sliding guide 8 for the moving means 4.

The control device 1 also has a radially internal stop 16 for the moving means 4, positioned along the rotating axis 7 of the moving means 4, and formed by central bosses 17 and 18 facing the disk and recess 11.

Therefore the moving means 4 are confined between the radially internal stop, the radially internal stop, the sliding guide 8 and the control member 5.

Radial guides (not illustrated) can also be obtained in the recess 11, adapted to guide the radial travel of the moving means 4.

Said radial guides are composed of grooves or beading positioned radially to the sliding guide 8.

A variant of the control device 1, not illustrated, can include an elastically yielding element to cause disk return, such as a taut spring aligned with the rotating axis of the moving means 4 and to join the disk to recess 11.

On the opposite side to the recess 11, the body 12 has a hub 19 that can be fitted on one end of the rotation transmission shaft 7.

Advantageously, the body 12 is obtained directly on the electric motor 2 cooling fan.

In the preferred embodiment illustrated herein, the electric motor 2 is connected through a transmission 20 having cogged wheels 21 and a belt 22 to the ice-cream machine which is the type comprising a cold generation system (not shown) associated with a drum 23, inside which a mixing blade 24 rotates driven by the electric motor 2.

Advantageously the ice-cream machine 3 is also equipped with a timer (not shown) adapted to periodically activate the cold generation system and the control device 1 power supply circuit so that when the ice-cream production is completed, the organoleptic characteristics and consistency of the ice-cream can be constantly maintained at optimum levels.

The ice-cream machine operation according to the invention is obvious from the illustrated descriptions, and in particular, is composed of the following.

Initially let us assume that the electric motor 2 rotates at the second angular speed. The moving means 4 are driven to the radially external stop, since the radial thrust towards the exterior caused by the resulting centrifugal force to which they are subjected, exceeds the radial thrust towards the interior caused by the weight of the moving means 4 and the control member 5, as well as the action of the possible return spring.

In this position the moving means 4 raise the control member 5 that subsequently presses the lever 9 which in turn triggers the switch to activate the power supply circuit closure.

When motor 2 begins to slow down as a result of the increase in resistance load, caused for example by excessive hardening of the mass of ice-cream being formed, the centrifugal action intensity on the moving means 4 is reduced until the first angular speed of motor 2 has been reached, the action of the weight of the moving means 4, the control member 5 and the possible return spring become prevailing, and return the moving means 4 to the radially internal stop, provoking a downwards movement of the control member 5 that releases the lever 9 on the switch, so that it is triggered to activate the power supply circuit opening.

Thanks to the timer, the invention also solves the problem of maintaining the correct density and optimum organoleptic characteristics of the ice cream for a certain period of time without the need for removing the ice cream from its drum at the end of its production.

In fact the control device 1 is set in a manner so that it will intervene to interrupt the circuit power supply when the motor slows down bringing it to the first angular speed that corresponds to the achievement of an ideal ice-cream consistency.

The timer will regularly reactivate the cold generation system and the control system 1.

If, upon another start-up of the machine, the ice cream does not have the required consistency, the motor rotation starts up at second speed and the control system permits power supply to the circuit until the ice cream is brought to the ideal consistency.

On the other hand, if, upon another start-up of the machine, the ice cream has the required consistency, the motor rotation speed remains at first speed and the control system does not permit power supply to the circuit.

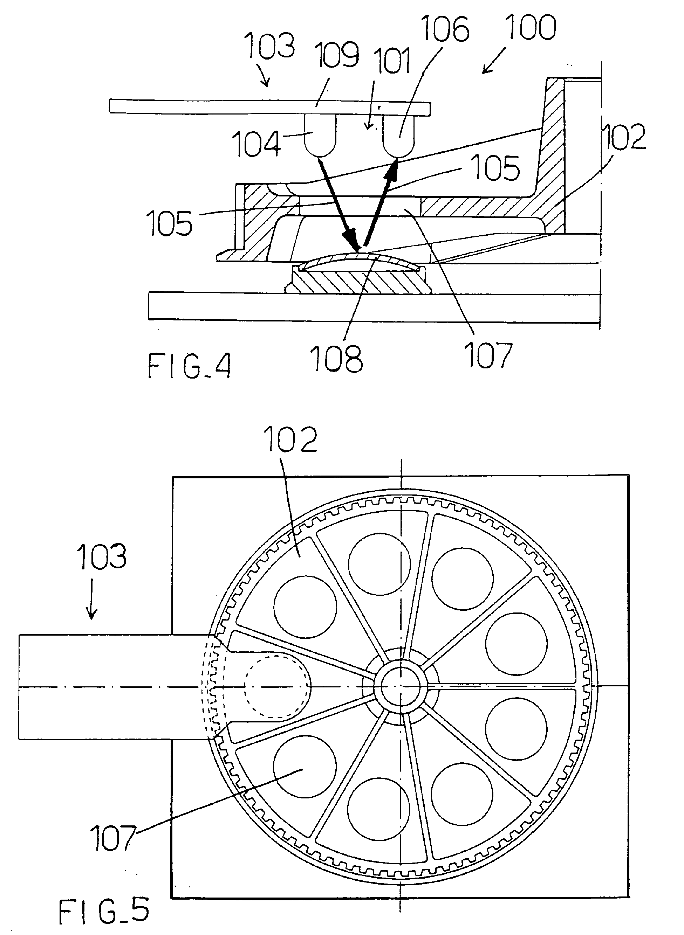

Figures 4 to 7 illustrate a different preferred embodiment of the power supply circuit control device on an electric motor according to the present finding and indicated throughout by the reference numeral 100.

In this case the device 100 presents optical detective means 101 which read the angular rotation speed of a rotation organ 102 connected directly or indirectly to the electric motor, and control means 103 adapted to intervene on a power supply circuit switch according to the detected rotation speed.

The optical detective means 101 comprise a emitter 104 of a light signal 105 and a receiver 106 to pick up the light signal 105 each time the latter is aligned with any one of a plurality of through holes 107 drilled in the rotating memeber 102.

In particular the holes 107 are angularly spaced along a circumference whose centre is formed by the rotating organ axis 102, whereby the rotating organ can be a wheel, as illustrated.

The emitter 104, and the receiver 106 are positioned on one side of the holes 107, while a reflecting element 108, such as a lens, is positioned on the other side of holes 107, to reflect the light signal 105 towards the receiver 106.

The control means, preferably comprising an electronic card 109, are adapted to calculate the time necessary for the rotation member 102 to travel a certain angular distance between the adjacent holes 107, or in other words, the number of interruptions of the light signal 105 within a time lapse.

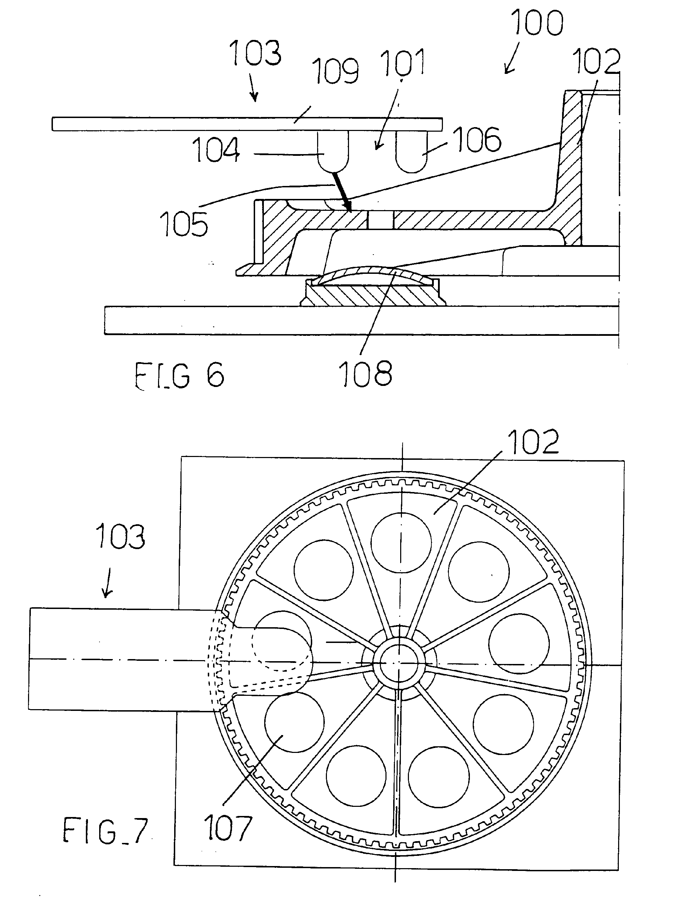

Figures 4 and 5 show the light beam 105 as it passes through the rotating member 102 because it does not meet any obstacle, while in figures 6 and 7 the light beam is stopped by the rotating organ 102 that blocks the beam passage.

The electronic card calculates how many times the light beam is stopped in the established time lapse, and if the result is lower than the programmed value; it activates the switch to cut off the electrical power supply to the circuit.

This device is the ideal application to maintain ice cream in perfect condition in an ice-cream machine.

Let us suppose that the resistance load of the ice cream as it is formed becomes gradually more consistent, and the mixing blade in the ice-cream machine is connected directly or indirectly to the rotating member 102.

When the ice cream is basically liquid, the blade and the rotating member 102 perform a constant number of rotations, and therefore the number of light beam interruptions within the time lapse is also constant.

When the ice-cream changes consistency and becomes thicker, the resistance load increases and the blade and the rotating member slow down until they eventually stop, thus reducing the number of light beam interruptions within the time lapse.

At the same time as the circuit power supply interruption, the electronic card activates a timer. Before the lapse programmed by the timer expires, the ice-cream machine remains in delay pause, and when the programmed time lapse expires the electronic card commands the switch to supply the circuit again, on condition that the resistance load is lower than the threshold value, such as the electric motor nominal power.

This control system is extremely advantageous in that it is extremely reliable since the control operates whenever the rotating organ is blocked or whenever it slows down. This permits far better motor use preserving its condition for longer machine life.

Said control system is extremely flexible because the rotating organ does not need to be installed directly on the motor or the cooling fan, but on any component downstream of the motor, in a position that is no doubt more accessible, comfortable and easy to inspect.

The control device conceived in this manner can be subject to numerous modifications and variants while all remaining within the context of the invention concept; moreover, all details can be replaced by technically equivalent elements.

Basically, the materials used, as well as their size can be of any type according to requirements and the technical state of the art.

## Claims

1. Power supply control device' for an electric motor **characterised in that** it has means for moving a control member of a switch on said power supply circuit, rotated by said electric motor shaft and radially movable, due to the effect of a variation in the centrifugal force to which they are subjected, between a first operating position wherein said control member activates a switch to open said power supply circuit, and a second operating position wherein said control member activates a switch to close said power supply circuit.

2. Power supply control device for an electric motor according to claim 1 **characterised in that** the displacement of said moving means between said first and second operating positions is caused by the variation in the angular speed of said electric motor induced by the variation in the resistance load on said shaft.

3. Power supply control device for an electric motor according to any previous claim **characterised in that** said moving means travel along a sliding guide that slopes at right angles to direction of the rotation axis of said moving means.

4. Power supply control device for an electric motor according to one or more previous claims **characterised in that** said first operating position is radially internal and corresponds to a first angular speed of said motor, and that said second operating position is radially external and corresponds to a second angular speed of said motor that is higher than the said first angular speed.

5. Power supply control device for an electric motor according to any previous claim **characterised in that** said switch presents a lever that is activated by said control member.

6. Power supply control device for an electric motor according to any previous claim **characterised in that** said control member is composed of a disk.

7. Power supply control device for an electric motor according to any previous claim **characterised in that** said moving means are composed of one or more spheres that move along said sloping sliding guide formed in a undercut of a recess of a body for housing and guiding said control member.

8. Power supply control device for an electric motor according to any previous claim **characterised in that** said recess guides said control member to run along the motor axis.

9. Power supply control device for an electric motor according to any previous claim **characterised in that** said sloping sliding guide has a surface that converges towards the radially external end of said disk.

10. Power supply control device for an electric motor according to any previous claim **characterised in that** said recess has a side wall to limit the sideways travel of said disk and to act as a radially external stop for said moving means, as well as a base that has at least one raised area for the direct support of said disk and at least one lowered area that defines said sliding guide.

11. Power supply control device for an electric motor according to any previous claim **characterised in that** it has a radially internal stop for said moving means positioned along the extension of said shaft axis.

12. Power supply control device for an electric motor according to any previous claim **characterised in that** said radially internal stop is composed of central bosses facing said disk and said recess.

13. Power supply control device for an electric motor according to any previous claim **characterised in that** radial guides are obtained in said recess, adapted to guide the radial travel of said moving means.

14. Power supply control device for an electric motor according to any previous claim **characterised in that** said radial guides are composed of radial grooves or beadings.

15. Power supply control device for an electric motor according to any previous claim **characterised in that** it has an elastically yielding element to cause the return of said disk.

16. Power supply control device for an electric motor according to any previous claim **characterised in that** said return element is composed of a spring aligned with the rotation axis of said moving means.

17. Power supply control device for an electric motor according to any previous claim **characterised in that** said body has a hub opposite said recess that can be fitted onto the end of said motor shaft for transmitting rotation from said shaft to said body.

18. Power supply control device for an electric motor according to any previous claim **characterised in that** said body is composed of a cooling fan for said electric motor.

19. Power supply control device for an electric motor **characterised in that** it has optical detective means to read the angular rotation speed of a rotating organ connected directly or indirectly to said electric motor, and control means adapted to intervene on a switch on said power supply circuit according to said detected rotation speed.

20. Power supply control device for an electric motor according to the previous claim **characterised in that** said optical reading means comprise a light signal emitter and receiver adapted to read said light signal when said signal is aligned with any hole among a plurality of through holes formed through the rotating member.

21. Power supply control device for an electric motor according to any previous claim **characterised in that** said holes are angularly spaced around the circumference centred in the rotation axis of said rotating member.

22. Power supply control device for an electric motor according to any previous claim **characterised in that** said emitter and said receiver are positioned on one side of said holes, while a reflecting element is positioned on' the other side adapted to reflect said light signal towards said receiver.

23. Power supply control device for an electric motor according to any previous claim **characterised in that** said control means are adapted to calculate the time lapse within which said rotating organ travels an established angular distance provided by the angular distance between adjacent holes, or in other words, the number of interruptions to said light signal within a said time lapse.

24. Power supply control device for an electric motor according to any previous claim **characterised in that** said command means are composed of an electronic card.

25. Machine for ice-cream production comprising a cold generation system associated with a drum wherein a mixing blade is rotated by an electric motor, **characterised in that** it has a control device for the power supply circuit of said electric motor according to one or more previous claims.

26. Machine for ice-cream production according to claim 25 **characterised in that** it has a timer adapted to automatically and periodically activate said cold generation system and said power supply circuit of said control device at the end of each ice-cream production cycle.

27. Method for ice-cream production according to claim 25 **characterised in that** it automatically and periodically activates said cold generation system and said power supply circuit of said control device at the end of each ice-cream production cycle in a manner so that the produced ice-cream consistency is constantly maintained at the required level.

28. Method for ice-cream production according to claim 27 **characterised in that** said first angular speed rate of said motor corresponds to the achievement of ideal ice-cream consistency.

29. Control device for the power supply circuit of an electric motor as described and claimed.
